# EUROPEAN PATENT SPECIFICATION

(11) **EP 3 419 210 B1**
(45) Date of publication and mention of the grant of the patent: **03.09.2025**
(21) Application number: 17177484.7
(22) Date of filing: 22.06.2017
(51) Int. Cl.: H04L 9/00, H04L 9/32

(54) **METHOD FOR GENERATING A TRANSACTION OF A BLOCKCHAIN AND METHOD FOR VALIDATING A BLOCK OF A BLOCKCHAIN**
VERFAHREN ZUR ERZEUGUNG EINER TRANSAKTION EINER BLOCKCHAIN UND VERFAHREN ZUM VALIDIEREN EINES BLOCKS EINER BLOCKCHAIN
PROCÉDÉ DE PRODUCTION D'UNE TRANSACTION DE CHAÎNE EN BLOC ET PROCÉDÉ DE VALIDATION D'UN BLOC DE CHAÎNE EN BLOC

(43) Date of publication of application: 26.12.2018
(73) Proprietor: ALMA GmbH, 10625 Berlin (DE)
(72) Inventor: BEDEROV, Denis, 10789 Berlin (DE)
(74) Representative: Manitz Finsterwald Patent- und Rechtsanwaltspartnerschaft mbB

(56) References cited:
- US-A- 5 745 574
- US-A1- 2016 253 663
- US-A1- 2016 292 680
- US-A1- 2017 046 638
- ANONYMOUS: "How does the digital signature verification process work? - Information Security Stack Exchange", 11 October 2011 (2011-10-11), XP055799549, Retrieved from the Internet <URL:https://security.stackexchange.com/questions/8034/how-does-the-digital-signature-verification-process-work?answertab=votes#tab-top> [retrieved on 20210428]

## Description

The present invention relates to a method for generating a transaction of a blockchain and a method for validating a block of a blockchain.

Blockchains are becoming more and more popular in a variety of applications. A blockchain is a distributed database, wherein information is recorded within a public transaction ledger (i.e. the blockchain).

For example, blockchains can be used for providing a currency, e.g. in the form of "digital money". One well-known example of such a currency is Bitcoin, which is a crypto-currency that is based on a peer-to-peer network. Other digital currencies include Litecoin or Primecoin.

In order to transfer amounts (or "coins") of such a currency within the blockchain, transactions are used. The transactions are usually distributed to nodes of the blockchain. The nodes check the transaction for correctness. Correct transactions can then be collected into blocks, wherein the transactions only become valid if they are included in one or more validated blocks of the blockchain.

The assessment if a transaction is correct and the validation of a block can be performed by a node of the blockchain. However, if the node assessing the transaction or validating the block is malicious or if a plurality or even the majority of the nodes of the blockchain is/are malicious, the integrity of the blockchain can be compromised and the blockchain can be vulnerable for different attacks.

US 2016/253663 A1 discloses a privately managed ledger for transactions. US 5 745 574 teaches a plurality of certification authorities connected by an open network. XP055799549 (https://security.stackexchange.com/questions/8034/how-does-the-digital-signature-verification-process-work) describes a verification of a digital signature using a trusted source.

It is the object of the present invention to provide a method that improves the security of the blockchain.

This object is solved by a method in accordance with claim 1 and 2.

Claim 1 relates to a method for generating or creating or validating a transaction of a blockchain, wherein
- the transaction is created or generated by a first node of the blockchain,
- a cryptographic signature using a private key of the first node is added to the transaction, thereby creating a signed transaction,
- the signed transaction is broadcast to a plurality of other nodes of the blockchain, wherein the other nodes verify the cryptographic signature of the signed transaction using a public key of the first node, wherein the other nodes check with a trusted entity, if the public key of the first node is valid.

Claim 2 relates to a method for validating a block of a blockchain, wherein
- the block is created or generated by a first node of the blockchain, wherein the block comprises one or more transactions,
- a cryptographic signature using a private key of the first node is added to the block, thereby creating a signed block,
- the signed block is broadcast to a plurality of other nodes of the blockchain, wherein the other nodes verify the cryptographic signature of the signed block using a public key of the first node, wherein the other nodes check with a trusted entity, if the public key of the first node is valid.

In case the public key of the first node is valid, the other nodes can accept the transaction and/or the block generated by the first node. However, according to the invention, if the public key of the first node is not valid, the other nodes will reject the transaction and/or the block generated by the first node. Due to the use of the trusted entity, it is possible to revoke and/or invalidate a public key of a node of the blockchain, which has the effect that the node, for which the public key was invalidated, cannot produce valid transactions and/or blocks anymore. The trusted entity can therefore exclude e.g. malicious nodes from generating correct transactions and/or validating blocks of the blockchain. Consequently, these malicious nodes cannot interfere with the blockchain anymore. Thereby a risk posed by the malicious nodes can be eliminated, thus significantly improving the security of the blockchain.

The trusted entity allows a centralized control over the decentralized blockchain. To allow the control of the trusted entity, the verification or check of the public key with the trusted entity may be included in the protocol of the blockchain (and is thus performed by all nodes of the blockchain).

To put it short, the transaction and/or the block are regarded as payload that is secured by the cryptographic signature.

In general, the signed transaction and/or the signed block may also be broadcast to only one other node of the blockchain, wherein the other node verifies the cryptographic signature of the signed transaction using a public key of the first node, wherein the other node checks with a trusted entity, if the public key of the first node is valid.

In the following, further aspects of the invention are described in more detail.

The blockchain can comprise the first node and the aforementioned other nodes, wherein the nodes can be part of the Internet or a data network. The nodes can have a data connection to the trusted entity and can also be interconnected using data connections. Particularly, all nodes can be identical to the first node.

A node can comprise only a software which allows one user (i.e. a market participant) to manage an account. The node may be formed by an instance which comprises the private key (e.g. the private key of the user). The software or node is not required to comprise a copy of the blockchain.

The private key and the public key of the first node may form a key-pair (i.e. the private and the public key correspond to each other). The private key used for adding the cryptographic signature can e.g. be the private key of a user, the private key of a node device or the private key linked to a specific account.

Particularly, the nodes may be peer-to-peer nodes. The nodes may be independent from each other and/or may be controlled by independent entities and/or persons. Every node may be a separate computer having a dedicated processor, memory devices and/or input-output-devices for communicating with further nodes. The first node and/or the other nodes can be a wallet device, wherein the wallet device can be a personal computer (PC), a handheld computer or a smartphone. The wallet device can also be named an e-wallet or a crypto-wallet.

The blockchain may store every transaction since the origin of the blockchain wherein a complete copy of the transaction history can be stored by at least some of the nodes.

In case the transactions are used to transfer digital money or a digital currency, the transactions can comprise one or more inputs or "unspent" inputs, which indicate an amount of currency a node (or the user operating the node) possesses (i.e. a credit balance). In other words, the inputs define how much the user can spend with the transaction. These inputs can be received from one of the nodes of the blockchain. Furthermore, the transaction can comprise one or more outputs. Each output indicates how much of the currency is to be transferred to a specific account (i.e. to another node). For example, each output can indicate one account number and the amount of currency that is to be transferred to the respective account number. A transaction can comprise a transaction fee which is awarded to the node validating the block that contains the transaction. The transaction may comprise or be one of the special transactions (as mentioned below). The transaction can also comprise a transaction signature, e.g. a further cryptographic signature that is used to sign the transaction itself. The further cryptographic signature can e.g. be based on a private key of a user who wants to transfer digital money to another user. The further cryptographic signature can be based on a hash-value of the transaction which is encrypted with the private key, e.g. of the user. This private key can e.g. represent an e-wallet. The further cryptographic signature could also be termed an "inner" cryptographic signature, as the cryptographic signature that is added after the transaction has been generated can also be based at least in part on the inner cryptographic signature. The cryptographic signature that is added to generate the signed transaction (as used herein) could - accordingly - be named an "outer" cryptographic signature. Alternatively, the cryptographic signature that is added to generate the signed transaction could also be the inner cryptographic signature.

After the transaction has been generated, and e.g. comprises the above-mentioned inputs and outputs, the (outer) cryptographic signature can be added to the transaction. The combination of the transaction and the cryptographic signature is called signed transaction herein. In order to generate the cryptographic signature, at least a part of the information contained in the transaction can be encrypted using the private key. The information that is being encrypted can be hashed before encryption, as explained further below.

Correspondingly, in order to generate the cryptographic signature for a block, at least a part of the information contained in the block can be encrypted using the private key. The information that is being encrypted can also be hashed before encryption, as explained further below.

The transactions can be grouped into blocks. For example, all transactions can be grouped into one minute blocks or ten minute blocks. This means that all transactions that have been generated within the last one or ten minutes are grouped into one block. For the avoidance of doubt, it is noted that a block can contain only transactions (i.e. without the above-mentioned cryptographic signature), only signed transactions (i.e. transactions with the above-mentioned cryptographic signature) or a mixture of transactions and signed transactions. Thus, a signed block can comprise one or more signed transactions.

In other words, a transaction and/or a block can be complemented with the cryptographic signature. Since the cryptographic signature is verified using the public key (which can be revoked by the trusted entity), the trusted entity realizes an improved security level.

Preferably, a Public Key Infrastructure (PKI) is used to check if the public key of the first node is valid. The PKI may allow to create, manage, distribute, use, store and/or revoke encryption keys, particularly public keys. For this purpose, the PKI can use a set of fixed policies and procedures. The PKI can comprise several computing entities that may be separate from each other, which execute the functions of the PKI. The use of the PKI allows an easy and secure implementation of the mechanisms required to check if a public key (i.e. the public key of the first node) is valid. Due to the security standards implemented in the PKI, the security of the blockchain can even further be improved.

Advantageously, the trusted entity is part of the PKI. Particularly, the trusted entity comprises a certificate authority (CA) and/or a registration authority (RA) and/or a validation authority (VA) of the PKI.

According to the invention, the trusted entity is a node of the blockchain, thus, for example, at least the VA can be incorporated into one or more nodes of the blockchain. The trusted entity can therefore perform a double function, wherein the trusted entity allows determining the validity of public keys of nodes of the blockchain and at the same time ensures the functionality of the blockchain.

Preferably, the private and/or public key of the first node are part of a certificate. The first node can retrieve the certificate from the trusted entity. The first node can use the certificate to provide the cryptographic signature, i.e. to sign the transaction and/or the block. The certificate can be a public key certificate which proves the ownership of the public key. In other words, the certificate can prove that its public key belongs to the first node of the blockchain (i.e. the public key is a device key). The certificate can include information about the key, information about the first node of the blockchain, the key (i.e. the public key) itself and/or a digital signature of an entity of the PKI that has verified the certificate contents. The certificate may be issued by the certificate authority (CA). The certificate may also comprise a serial number, i.e. a unique identifier. The CA can provide a list with revoked/invalidated certificates based on their serial numbers to the VA, thereby excluding certain nodes from generating correct/valid transactions and/or from participating in the validation of blocks of the blockchain.

The registration authority can be used to verify the identity of the nodes requesting a digital certificate from the CA. The validation authority can be an entity that provides a service to verify the validity of a certificate (and thereby the validity of a public key). The VA may check with the CA if a certificate or a public key is still valid.

It is preferred if the blockchain is used for a crypto-currency and if transactions are used to transfer coins of the crypto-currency. A "coin" may be a unit of the crypto-currency.

Generally, the cryptographic signature may comprise some data relating to the transaction that has been encrypted using the private key. According to the invention, the cryptographic signature comprises a hash-value of at least part of the information contained in the transaction, wherein the hash-value is encrypted with the private key of the first node.

Correspondingly, the cryptographic signature may comprise some data relating to the block that has been encrypted using the private key. According to the invention, the cryptographic signature comprises a hash-value of at least part of the information contained in the block, wherein the hash-value is encrypted with the private key of the first node.

In other words, signature information (i.e. the cryptographic signature) can be added to the transaction and/or the block by the first node thereby generating the signed transaction and/or the signed block. This signature information can comprise a hash-value of all the information contained in the transaction and/or the block, wherein the hash-value is preferably created using a cryptographic hash-function such as SHA-2, MD5 and the like.

Advantageously the transaction and/or the block is/are generated using a Proof-of-Stake (PoS) concept. The generation of the block using PoS may use a special transaction (a so-called Coinstake Transaction), wherein the first node produces the special transaction that transfers a certain amount of coins to itself (i.e. to the first node), thereby generating a block for the blockchain. The special transaction may comprise the transaction fees for all transactions comprised in the block. The transaction fees can be transferred to the first node. Generating the block may allow the first node the privilege to mint new coins, thereby enlarging its number of coins. For example, for each successfully generated block, 1%, 5% or 10% of the coins possessed by the first node can be awarded as a reward or bonus, wherein preferably the reward or bonus is calculated per year. The bonus may also be comprised in the special transaction. Thereby in statistical average, each node (or user) may gain 1%, 5% or 10% of its coins, respectively, per year. The first node may send itself the coins minted during the generation of the block.

If one node has not been awarded the expected bonus (e.g. of 10%), the protocol of the blockchain may then allow the node to mint new coins (i.e. a number of coins corresponding to the expected bonus) without successfully validating a block. Alternatively or additionally, one node of the blockchain may transfer coins to the node that has not received the expected bonus in order to provide the bonus.

The chance of successfully validating the block may rise with the number of coins a node possesses and/or with the time span that the coins have been possessed by the node. Preferably, the chance or probability of successfully validating the block depends on a multiplication of the number of coins with the time span the coin have been possessed by the node. When a node successfully validates a block, the time span may be reset (i.e. set to zero) and/or the node may be excluded from validating blocks for a predefined length of time. The length of time may depend on the number of coins the node possesses.

Preferably, the transaction and/or the block (e.g. the special transaction contained in the block) comprises information about the number of coins the first node possesses and information on how long these coins have been possessed by the first node. In other words, the transaction and/or the block may comprise PoS-information. Consequently, the cryptographic signature may depend on the PoS-information.

In order to determine which node is allowed to validate a block, a voting procedure within the blockchain may take place. For this voting procedure each node in the blockchain stochastically determines one node which should be allowed to validate the block based on e.g. the above-mentioned multiplication (i.e. the number of coins the respective node possesses multiplied with the time span that these coins have been possessed by the respective node). The chance of a node being stochastically selected may be the higher, the higher the product of the number of coins multiplied with the time span these coins have been possessed by the (first) node is. The one node gaining the most votes is then allowed to validate the block and to perform the generation of new coins (i.e. perform the minting).

Further preferably, the transaction and/or the block is/are generated using a Proof-of-Work (PoW) concept. The PoW concept is based on solving a complex task that requires high amounts of energy and computing force. As a reward for the generation of a block using PoW, a predefined amount of coins can be awarded to the node generating the block. The block may comprise information of the PoW that the first node has produced. A transaction that comprises information about the PoW that the first node has produced can be a Coinbase Transaction.

It may be preferred to allow the generation of blocks using PoS and PoW in parallel. For example, a first transaction within a block may comprise PoW information and/or a second transaction within the same block may comprise PoS information. The first and second transaction can both be special transactions. The special transactions can also be complemented with the cryptographic signature and thus are treated as "normal" transactions. Preferably, the validity of the public key of the first node is only checked for transactions generated based on PoS. This allows a fallback to a blockchain based only on PoW in case all public keys of the blockchain are revoked.

The reward for generating a block using PoW may be small as compared to the reward for generating a block using PoS, as the generation of blocks using PoW is undesired due to the high amount of energy consumed for PoW-blocks and the possibility of attacks based on PoW (e.g. the so called "51% attack").

The invention also relates to a system for a blockchain in accordance with claim 10.

The disclosure further relates to a node device of a blockchain, wherein
the node device is configured to
   - generate a transaction of the blockchain,
   - add a cryptographic signature to the transaction using a private key, thereby creating a signed transaction,
   - transmit the signed transaction to other nodes,
and/or wherein
the node device is configured to
   - generate a block of the blockchain, wherein the block comprises one or more transactions,
   - add a cryptographic signature to the block using a private key, thereby creating a signed block,
   - transmit the signed block to other nodes.

The node device can be adapted to verify the cryptographic signature of the signed transaction and/or a signed block using a public key of the respective node, wherein the node device checks with the trusted entity, if the public key of the respective node is valid. Particularly, the node device can perform the verification of the cryptographic signature upon reception of a signed transaction and/or a signed block from another node.

The node device may form the first node, as explained above. The node device may comprise a control unit (e.g. a CPU - Central Processing Unit) and a memory, e.g. for storing the private key and/or blocks of the blockchain. The node device may be a personal computer (PC), a handheld computer or a smartphone.

The disclosure related to the methods of the invention also relates to the inventive system and the inventive node device. This is particularly true in view of the advantages and preferred embodiments mentioned above.

Various features and advantages of the present invention will become more apparent from the following description and accompanying drawing, wherein:
- Fig. 1: shows a schematic view of the working principle of a blockchain when a transaction is generated and distributed;
- Fig. 2: shows a schematic view of the working principle of a blockchain when a block is validated.

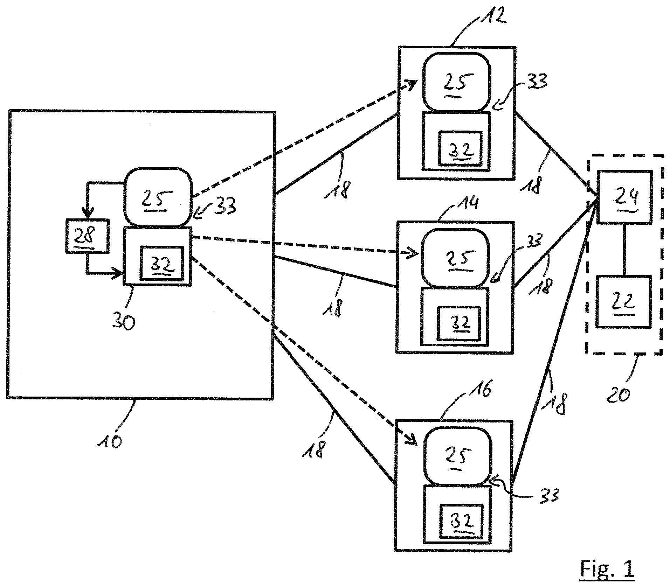

Fig. 1 shows a first node 10, a second node 12, a third node 14 and a fourth node 16. The nodes 10-16 execute the functions of a blockchain. The nodes 10-16 are interconnected using data connections 18 (e.g. Ethernet-connections). The nodes 10-16 can be identical instances of the same kind of node 10-16, wherein in the following the first node 10 is exemplarily described in more detail.

The data connections 18 also connect the nodes 10-16 to a trusted entity 20 which comprises a certificate authority (CA) 22 and a validation authority (VA) 24. The CA 22 and the VA 24 are part of a Public Key Infrastructure (PKI) wherein the CA 22 is adapted to issue certificates for public and/or private keys and to revoke public and/or private keys. The VA 24 could also be incorporated into each of the nodes 10-16.

Fig. 1 shows a transaction 25 which is generated by the first node 10 in order to transfer an amount of coins of a crypto-currency from one account to another.

The information of the transaction 25 is hashed using a cryptographic hash-function (not shown), wherein the result of the hash-function is encrypted using a private key 28. The data encrypted with the private key 28 forms a digital signature 30 (i.e. a cryptographic signature). The digital signature 30 also comprises a public key 32 of the first node 10. The public key 32 and the private key 28 form a key-pair.

The transaction 25 together with the digital signature 30 forms a signed transaction 33. The signed transaction 33 is transmitted from the first node 10 to all the other nodes 12, 14, 16 using the data connections 18.

The other nodes 12-16 then verify the digital signature 30. Additionally, the other nodes 12-16 contact the VA 24 to check if the public key 32 of the first node 10 is valid or has been revoked.

Only if the transaction 25 is correct, the digital signature 30 is correct and if the public key 32 of the first node 10 is valid, the other nodes 12-16 accept the transaction 25.

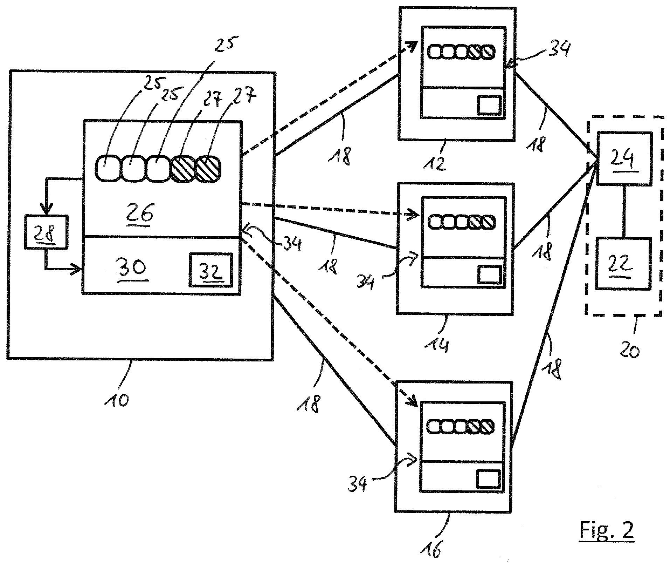

Several of the transactions 25 and/or of the signed transactions 33 may be collected during a predefined time interval of one minute. The transactions 25 and/or signed transactions 33 may be gathered into one block 26, as is shown in Fig. 2.

As depicted in Fig. 2, the first node 10 also adds two special transactions 27 to the block 26. The first special transaction 27 may comprise information about a Proof of Work (PoW) the first node 10 has achieved or can be an empty transaction. A second special transaction 27 comprises information about the number of coins of the first node 10 and the time span the first node 10 has possessed the coins (i.e. comprises information about Proof of Stake - PoS). The special transactions 27 also transfer transaction fees and a bonus of 10% of the coins of the first node 10 to the first node 10. The special transactions 27 can also be the base for a signed transaction 33. Also, it is possible that the block 26 comprises at least some signed transactions 33 instead of the shown transactions 25, 27.

The information of the block 26 is hashed using a cryptographic hash-function (not shown), wherein the result of the hash-function is encrypted using the private key 28. The data encrypted with the private key 28 forms the digital signature 30 of the block 26. The digital signature 30 also comprises the public key 32 of the first node 10.

The block 26 together with the digital signature 30 is regarded as a signed block 34.

The signed block 34 is then transmitted from the first node 10 to all the other nodes 12, 14, 16 using the data connections 18.

Similar to the procedure regarding the transaction 25, the other nodes 12-16 then verify the digital signature 30. Additionally, the other nodes 12-16 contact the VA 24 to check if the public key 32 of the first node 10 is valid or has been revoked.

Only if the block 26 is correct, the digital signature 30 is correct and if the public key 32 of the first node 10 is valid, the other nodes 12-16 accept the block 26. Thereby the block 26 is entered into the blockchain.

In case an attacker gains control over the first node 10, the trusted entity 20 can revoke the certificate that comprises the public key 32 of the first node 10. This will lead the VA 24 to inform the other nodes 12-16 that the public key 32 of the first node 10 has been revoked, which results in a non-acceptance of transactions 25, of special transactions 27 and/or of the block 26 of the first node 10. The attacker therefore cannot manipulate the blockchain, which leads to an improved security of the blockchain.

### List of reference signs

- 10: first node
- 12: second node
- 14: third node
- 16: fourth node
- 18: data connection
- 20: trusted entity
- 22: certificate authority (CA)
- 24: validation authority (VA)
- 25: transaction
- 26: block
- 27: special transaction
- 28: private key
- 30: digital signature
- 32: public key
- 33: signed transaction
- 34: signed block

## Claims

1. A method for generating a transaction (25, 27) of a blockchain, wherein
- the transaction (25, 27) is generated by a first node (10) of the blockchain,
- a cryptographic signature (30) using a private key (28) of the first node (10) is added to the transaction (25, 27), thereby creating a signed transaction (33), wherein the cryptographic signature (30) comprises a hash-value of the information contained in the transaction (25, 27), wherein the hash-value is encrypted with the private key (28) of the first node (10),
- the signed transaction (33) is broadcast to a plurality of other nodes (12, 14, 16) of the blockchain, wherein the other nodes (12, 14, 16) verify the cryptographic signature (30) of the signed transaction (33) using a public key (32) of the first node (10), wherein the other nodes (12, 14, 16) check with a trusted entity (20), if the public key (32) of the first node (10) is valid, wherein the trusted entity (20) is a node of the blockchain, wherein if the public key (32) of the first node (10) is not valid, the other nodes (12, 14, 16) reject the transaction (25, 27) generated by the first node (10), wherein each node (10, 12, 14, 16) is a separate computer having a dedicated processor, memory devices and/or input-output-devices for communicating with further nodes (10, 12, 14, 16), wherein a complete copy of the transaction history of the blockchain is stored by at least some of the nodes (10, 12, 14, 16).

2. A method for validating a block (26) of a blockchain, wherein
- the block (26) is generated by a first node (10) of the blockchain, wherein the block (26) comprises one or more transactions (25, 27),
- a cryptographic signature (30) using a private key (28) of the first node (10) is added to the block (26), thereby creating a signed block (34), wherein the cryptographic signature (30) comprises a hash-value of the information contained in the block (26), wherein the hash-value is encrypted with the private key (28) of the first node (10),
- the signed block (34) is broadcast to a plurality of other nodes (12, 14, 16) of the blockchain, wherein the other nodes (12, 14, 16) verify the cryptographic signature (30) of the signed block (34) using a public key (32) of the first node (10), wherein the other nodes (12, 14, 16) check with a trusted entity (20), if the public key (32) of the first node (10) is valid, wherein the trusted entity (20) is a node of the blockchain, wherein if the public key (32) of the first node (10) is not valid, the other nodes (12, 14, 16) reject the block (26, 34) generated by the first node (10), wherein each node (10, 12, 14, 16) is a separate computer having a dedicated processor, memory devices and/or input-output-devices for communicating with further nodes (10, 12, 14, 16), wherein a complete copy of the transaction history of the blockchain is stored by at least some of the nodes (10, 12, 14, 16).

3. The method of claim 1 or 2, wherein
a Public Key Infrastructure (PKI) is used to check if the public key (32) of the first node (10) is valid.

4. The method of claim 3, wherein
the trusted entity (20) is part of the PKI.

5. The method of claim 3 or 4, wherein
the trusted entity (20) comprises a certificate authority (CA) (22) and/or a registration authority (RA) and/or a validation authority (VA) (24) of the PKI.

6. The method of at least one of the previous claims, wherein
the private and/or public key (28, 32) of the first node (10) are part of a certificate.

7. The method of at least one of the previous claims, wherein
the blockchain is used for a crypto currency and transactions (25, 27) are used to transfer coins of the crypto currency.

8. The method of at least one of the previous claims, wherein
the transaction (25, 27) and/or the block (26) is/are generated using a Proof-of-Stake (PoS) concept.

9. The method of at least one of the previous claims, wherein
the transaction (25, 27) and/or the block (26) is/are generated using a Proof-of-Work (PoW) concept.

10. A system for a blockchain comprising
- a first node (10),
- a plurality of other nodes (12, 14, 16) and
- a trusted entity (20), wherein
- the nodes (10, 12, 14, 16) and the trusted entity (20) are connected to each other using data connections (18),
and wherein the first node (10) is adapted to
- generate a transaction (25, 27) of the blockchain,
- add a cryptographic signature (30) using a private key (28) of the first node (10) to the transaction (25, 27), thereby creating a signed transaction (33), wherein the cryptographic signature (30) comprises a hash-value of the information contained in the transaction (25, 27), wherein the hash-value is encrypted with the private key (28) of the first node (10),
- transmit the signed transaction (33) to the other nodes (12, 14, 16), wherein the other nodes (12, 14, 16) are configured to verify the cryptographic signature (30) of the signed transaction (33) using a public key (32) of the first node (10), wherein the other nodes (12, 14, 16) check with the trusted entity (20), if the public key (32) of the first node (10) is valid, wherein the trusted entity (20) is a node of the blockchain, wherein if the public key (32) of the first node (10) is not valid, the other nodes (12, 14, 16) reject the transaction (25, 27) generated by the first node (10), wherein each node (10, 12, 14, 16) is a separate computer having a dedicated processor, memory devices and/or input-output-devices for communicating with further nodes (10, 12, 14, 16), wherein a complete copy of the transaction history of the blockchain is stored by at least some of the nodes (10, 12, 14, 16),
and/or wherein the first node (10) is adapted to
- generate a block (26) of the blockchain, wherein the block (26) comprises one or more transactions (25, 27),
- add a cryptographic signature (30) using a private key (28) of the first node (10) to the block (26), thereby creating a signed block (34), wherein the cryptographic signature (30) comprises a hash-value of the information contained in the block (26), wherein the hash-value is encrypted with the private key (28) of the first node (10),
- transmit the signed block (34) to the other nodes (12, 14, 16), wherein the other nodes (12, 14, 16) are configured to verify the cryptographic signature (30) of the signed block (34) using a public key (32) of the first node (10), wherein the other nodes (12, 14, 16) check with the trusted entity (20), if the public key (32) of the first node (10) is valid, wherein the trusted entity (20) is a node of the blockchain, wherein if the public key (32) of the first node (10) is not valid, the other nodes (12, 14, 16) reject the block (26, 34) generated by the first node (10), wherein each node (10, 12, 14, 16) is a separate computer having a dedicated processor, memory devices and/or input-output-devices for communicating with further nodes (10, 12, 14, 16), wherein a complete copy of the transaction history of the blockchain is stored by at least some of the nodes (10, 12, 14, 16).

## Patentansprüche

1. Verfahren zum Erzeugen einer Transaktion (25, 27) einer Blockchain, wobei
- die Transaktion (25, 27) durch einen ersten Knoten (10) der Blockchain erzeugt wird,
- eine kryptographische Signatur (30) unter Verwendung eines privaten Schlüssels (28) des ersten Knotens (10) zu der Transaktion (25, 27) hinzugefügt wird, wodurch eine signierte Transaktion (33) erzeugt wird, wobei die kryptographische Signatur (30) einen Hash-Wert der in der Transaktion (25, 27) enthaltenen Information umfasst, wobei der Hash-Wert mit dem privaten Schlüssel (28) des ersten Knotens (10) verschlüsselt ist,
- die signierte Transaktion (33) an eine Vielzahl von anderen Knoten (12, 14, 16) der Blockchain gesendet wird, wobei die anderen Knoten (12, 14, 16) die kryptographische Signatur (30) der signierten Transaktion (33) unter Verwendung eines öffentlichen Schlüssels (32) des ersten Knotens (10) verifizieren, wobei die anderen Knoten (12, 14, 16) mit einer vertrauenswürdigen Entität (20) prüfen, ob der öffentliche Schlüssel (32) des ersten Knotens (10) gültig ist, wobei die vertrauenswürdige Entität (20) ein Knoten der Blockchain ist, wobei, wenn der öffentliche Schlüssel (32) des ersten Knotens (10) nicht gültig ist, die anderen Knoten (12, 14, 16) die durch den ersten Knoten (10) erzeugte Transaktion (25, 27) ablehnen, wobei jeder Knoten (10, 12, 14, 16) ein separater Computer mit einem dedizierten Prozessor, Speichervorrichtungen und/oder Eingabe-Ausgabe-Vorrichtungen zum Kommunizieren mit weiteren Knoten (10, 12, 14, 16) ist, wobei eine vollständige Kopie des Transaktionsverlaufs der Blockchain durch mindestens einige der Knoten (10, 12, 14, 16) gespeichert wird.

2. Verfahren zum Validieren eines Blocks (26) einer Blockchain, wobei
- der Block (26) durch einen ersten Knoten (10) der Blockchain erzeugt wird, wobei der Block (26) eine oder mehrere Transaktionen (25, 27) umfasst,
- eine kryptographische Signatur (30) unter Verwendung eines privaten Schlüssels (28) des ersten Knotens (10) zu dem Block (26) hinzugefügt wird, wodurch ein signierter Block (34) erzeugt wird, wobei die kryptographische Signatur (30) einen Hash-Wert der in dem Block (26) enthaltenen Information umfasst, wobei der Hash-Wert mit dem privaten Schlüssel (28) des ersten Knotens (10) verschlüsselt ist,
- der signierte Block (34) an eine Vielzahl von anderen Knoten (12, 14, 16) der Blockchain gesendet wird, wobei die anderen Knoten (12, 14, 16) die kryptographische Signatur (30) des signierten Blocks (34) unter Verwendung eines öffentlichen Schlüssels (32) des ersten Knotens (10) verifizieren, wobei die anderen Knoten (12, 14, 16) mit einer vertrauenswürdigen Entität (20) prüfen, ob der öffentliche Schlüssel (32) des ersten Knotens (10) gültig ist, wobei die vertrauenswürdige Entität (20) ein Knoten der Blockchain ist, wobei, wenn der öffentliche Schlüssel (32) des ersten Knotens (10) nicht gültig ist, die anderen Knoten (12, 14, 16) den durch den ersten Knoten (10) erzeugten Block (26, 34) ablehnen, wobei jeder Knoten (10, 12, 14, 16) ein separater Computer mit einem dedizierten Prozessor, Speichervorrichtungen und/oder Eingabe-Ausgabe-Vorrichtungen zum Kommunizieren mit weiteren Knoten (10, 12, 14, 16) ist, wobei eine vollständige Kopie des Transaktionsverlaufs der Blockchain durch mindestens einige der Knoten (10, 12, 14, 16) gespeichert wird.

3. Verfahren nach einem der Ansprüche 1 oder 2, wobei
eine Public-Key-Infrastruktur (PKI) verwendet wird, um zu prüfen, ob der öffentliche Schlüssel (32) des ersten Knotens (10) gültig ist.

4. Verfahren nach Anspruch 3, wobei
die vertrauenswürdige Entität (20) Teil der PKI ist.

5. Verfahren nach einem der Ansprüche 3 oder 4, wobei
die vertrauenswürdige Entität (20) eine Zertifizierungsstelle (CA) (22) und/oder eine Registrierungsstelle (RA) und/oder eine Validierungsstelle (VA) (24) der PKI umfasst.

6. Verfahren nach einem der vorhergehenden Ansprüche, wobei
der private und/oder öffentliche Schlüssel (28, 32) des ersten Knotens (10) Teil eines Zertifikats sind.

7. Verfahren nach einem der vorhergehenden Ansprüche, wobei
die Blockchain für eine Kryptowährung verwendet wird und Transaktionen (25, 27) verwendet werden, um Münzen der Kryptowährung zu übertragen.

8. Verfahren nach einem der vorhergehenden Ansprüche, wobei
die Transaktion (25, 27) und/oder der Block (26) unter Verwendung eines Proof-of-Stake (PoS)-Konzepts erzeugt wird/werden.

9. Verfahren nach einem der vorhergehenden Ansprüche, wobei
die Transaktion (25, 27) und/oder der Block (26) unter Verwendung eines Proof-of-Work (PoW)-Konzepts erzeugt wird/werden.

10. System für eine Blockchain, umfassend
- einen ersten Knoten (10),
- eine Vielzahl von anderen Knoten (12, 14, 16) und
- eine vertrauenswürdige Entität (20), wobei
- die Knoten (10, 12, 14, 16) und die vertrauenswürdige Entität (20) unter Verwendung von Datenverbindungen (18) miteinander verbunden sind, und wobei der erste Knoten (10) dazu ausgelegt ist,
- eine Transaktion (25, 27) der Blockchain zu erzeugen,
- eine kryptographische Signatur (30) unter Verwendung eines privaten Schlüssels (28) des ersten Knotens (10) zu der Transaktion (25, 27) hinzuzufügen, wodurch eine signierte Transaktion (33) erzeugt wird, wobei die kryptographische Signatur (30) einen Hash-Wert der in der Transaktion (25, 27) enthaltenen Information umfasst, wobei der Hash-Wert mit dem privaten Schlüssel (28) des ersten Knotens (10) verschlüsselt ist,
- die signierte Transaktion (33) an die anderen Knoten (12, 14, 16) zu übertragen, wobei die anderen Knoten (12, 14, 16) dazu konfiguriert sind, die kryptographische Signatur (30) der signierten Transaktion (33) unter Verwendung eines öffentlichen Schlüssels (32) des ersten Knotens (10) zu verifizieren, wobei die anderen Knoten (12, 14, 16) mit der vertrauenswürdigen Entität (20) prüfen, ob der öffentliche Schlüssel (32) des ersten Knotens (10) gültig ist, wobei die vertrauenswürdige Entität (20) ein Knoten der Blockchain ist, wobei, wenn der öffentliche Schlüssel (32) des ersten Knotens (10) nicht gültig ist, die anderen Knoten (12, 14, 16) die durch den ersten Knoten (10) erzeugte Transaktion (25, 27) ablehnen, wobei jeder Knoten (10, 12, 14, 16) ein separater Computer mit einem dedizierten Prozessor, Speichervorrichtungen und/oder Eingabe-Ausgabe-Vorrichtungen zum Kommunizieren mit weiteren Knoten (10, 12, 14, 16) ist, wobei eine vollständige Kopie des Transaktionsverlaufs der Blockchain durch mindestens einige der Knoten (10, 12, 14, 16) gespeichert wird,
und/oder wobei der erste Knoten (10) dazu ausgelegt ist,
- einen Block (26) der Blockchain zu erzeugen, wobei der Block (26) eine oder mehrere Transaktionen (25, 27) umfasst,
- eine kryptographische Signatur (30) unter Verwendung eines privaten Schlüssels (28) des ersten Knotens (10) zu dem Block (26) hinzuzufügen, wodurch ein signierter Block (34) erzeugt wird, wobei die kryptographische Signatur (30) einen Hash-Wert der in dem Block (26) enthaltenen Information umfasst, wobei der Hash-Wert mit dem privaten Schlüssel (28) des ersten Knotens (10) verschlüsselt ist,
- den signierten Block (34) an die anderen Knoten (12, 14, 16) zu übertragen, wobei die anderen Knoten (12, 14, 16) dazu konfiguriert sind, die kryptographische Signatur (30) des signierten Blocks (34) unter Verwendung eines öffentlichen Schlüssels (32) des ersten Knotens (10) zu verifizieren, wobei die anderen Knoten (12, 14, 16) mit der vertrauenswürdigen Entität (20) prüfen, ob der öffentliche Schlüssel (32) des ersten Knotens (10) gültig ist, wobei die vertrauenswürdige Entität (20) ein Knoten der Blockchain ist, wobei, wenn der öffentliche Schlüssel (32) des ersten Knotens (10) nicht gültig ist, die anderen Knoten (12, 14, 16) den durch den ersten Knoten (10) erzeugten Block (26, 34) ablehnen, wobei jeder Knoten (10, 12, 14, 16) ein separater Computer mit einem dedizierten Prozessor, Speichervorrichtungen und/oder Eingabe-Ausgabe-Vorrichtungen zum Kommunizieren mit weiteren Knoten (10, 12, 14, 16) ist, wobei eine vollständige Kopie des Transaktionsverlaufs der Blockchain durch mindestens einige der Knoten (10, 12, 14, 16) gespeichert wird.

## Revendications

1. Procédé de génération d'une transaction (25, 27) d'une chaîne de blocs, dans lequel
- la transaction (25, 27) est générée par un premier nœud (10) de la chaîne de blocs,
- une signature cryptographique (30) utilisant une clé privée (28) du premier nœud (10) est ajoutée à la transaction (25, 27), créant ainsi une transaction signée (33), dans lequel la signature cryptographique (30) comprend une valeur de hachage des informations contenues dans la transaction (25, 27), dans lequel la valeur de hachage est cryptée avec la clé privée (28) du premier nœud (10),
- la transaction signée (33) est diffusée à une pluralité d'autres nœuds (12, 14, 16) de la chaîne de blocs, dans lequel les autres nœuds (12, 14, 16) vérifient la signature cryptographique (30) de la transaction signée (33) à l'aide d'une clé publique (32) du premier nœud (10), dans lequel les autres nœuds (12, 14, 16) vérifient auprès d'une entité de confiance (20) si la clé publique (32) du premier nœud (10) est valide, dans lequel l'entité de confiance (20) est un nœud de la chaîne de blocs, dans lequel si la clé publique (32) du premier nœud (10) n'est pas valide, les autres nœuds (12, 14, 16) rejettent la transaction (25, 27) générée par le premier nœud (10), dans lequel chaque nœud (10, 12, 14, 16) est un ordinateur distinct doté d'un processeur dédié, de dispositifs de mémoire et/ou de dispositifs d'entrée-sortie pour communiquer avec d'autres nœuds (10, 12, 14, 16), dans lequel une copie complète de l'historique des transactions de la chaîne de blocs est stockée par au moins certains des nœuds (10, 12, 14, 16).

2. Procédé de validation d'un bloc (26) d'une chaîne de blocs, dans lequel
- le bloc (26) est généré par un premier nœud (10) de la chaîne de blocs, dans lequel le bloc (26) comprend une ou plusieurs transactions (25, 27),
- une signature cryptographique (30) utilisant une clé privée (28) du premier nœud (10) est ajoutée au bloc (26), créant ainsi un bloc signé (34), dans lequel la signature cryptographique (30) comprend une valeur de hachage des informations contenues dans le bloc (26), dans lequel la valeur de hachage est cryptée avec la clé privée (28) du premier nœud (10),
- le bloc signé (34) est diffusé à une pluralité d'autres nœuds (12, 14, 16) de la chaîne de blocs, dans lequel les autres nœuds (12, 14, 16) vérifient la signature cryptographique (30) du bloc signé (34) à l'aide d'une clé publique (32) du premier nœud (10), dans lequel les autres nœuds (12, 14, 16) vérifient auprès d'une entité de confiance (20) si la clé publique (32) du premier nœud (10) est valide, dans lequel l'entité de confiance (20) est un nœud de la chaîne de blocs, dans lequel si la clé publique (32) du premier nœud (10) n'est pas valide, les autres nœuds (12, 14, 16) rejettent le bloc (26, 34) généré par le premier nœud (10), dans lequel chaque nœud (10, 12, 14, 16) est un ordinateur distinct doté d'un processeur dédié, de dispositifs de mémoire et/ou de dispositifs d'entrée-sortie pour communiquer avec d'autres nœuds (10, 12, 14, 16), dans lequel une copie complète de l'historique des transactions de la chaîne de blocs est stockée par au moins certains des nœuds (10, 12, 14, 16).

3. Procédé selon la revendication 1 ou 2, dans lequel
une infrastructure à clés publiques (PKI) est utilisée pour vérifier si la clé publique (32) du premier nœud (10) est valide.

4. Procédé selon la revendication 3, dans lequel
l'entité de confiance (20) fait partie de la PKI.

5. Procédé selon la revendication 3 ou 4, dans lequel
l'entité de confiance (20) comprend une autorité de certification (CA) (22) et/ou une autorité d'enregistrement (RA) et/ou une autorité de validation (VA) (24) de la PKI**.**

6. Procédé selon au moins l'une des revendications précédentes, dans lequel
la clé privée et/ou publique (28, 32) du premier nœud (10) font partie d'un certificat.

7. Procédé selon au moins l'une des revendications précédentes, dans lequel
la chaîne de blocs est utilisée pour une cryptomonnaie et les transactions (25, 27) sont utilisées pour transférer des pièces de la cryptomonnaie.

8. Procédé selon au moins l'une des revendications précédentes, dans lequel
la transaction (25, 27) et/ou le bloc (26) est/sont généré(s) à l'aide d'un concept de preuve d'enjeu (PoS).

9. Procédé selon au moins l'une des revendications précédentes, dans lequel
la transaction (25, 27) et/ou le bloc (26) est/sont généré(s) à l'aide d'un concept de preuve de travail (PoW).

10. Système pour une chaîne de blocs comprenant
- un premier nœud (10),
- une pluralité d'autres nœuds (12, 14, 16) et
- une entité de confiance (20), dans lequel
- les nœuds (10, 12, 14, 16) et l'entité de confiance (20) sont connectés les uns aux autres à l'aide de connexions de données (18), et dans lequel le premier nœud (10) est adapté à
- générer une transaction (25, 27) de la chaîne de blocs,
- ajouter une signature cryptographique (30) à l'aide d'une clé privée (28) du premier nœud (10) à la transaction (25, 27), créant ainsi une transaction signée (33), dans lequel la signature cryptographique (30) comprend une valeur de hachage des informations contenues dans la transaction (25, 27),
dans lequel la valeur de hachage est cryptée avec la clé privée (28) du premier nœud (10),
- transmettre la transaction signée (33) aux autres nœuds (12, 14, 16), dans lequel les autres nœuds (12, 14, 16) sont configurés pour vérifier la signature cryptographique (30) de la transaction signée (33) à l'aide d'une clé publique (32) du premier nœud (10), dans lequel les autres nœuds (12, 14, 16) vérifient auprès de l'entité de confiance (20) si la clé publique (32) du premier nœud (10) est valide, dans lequel l'entité de confiance (20) est un nœud de la chaîne de blocs, dans lequel si la clé publique (32) du premier nœud (10) n'est pas valide, les autres nœuds (12, 14, 16) rejettent la transaction (25, 27) générée par le premier nœud (10), dans lequel chaque nœud (10, 12, 14, 16) est un ordinateur distinct ayant un processeur dédié, des dispositifs de mémoire et/ou des dispositifs d'entrée-sortie pour communiquer avec d'autres nœuds (10, 12, 14, 16), dans lequel une copie complète de l'historique des transactions de la chaîne de blocs est stockée par au moins certains des nœuds (10, 12, 14, 16),
et/ou dans lequel le premier nœud (10) est adapté à
- générer un bloc (26) de la chaîne de blocs, dans lequel le bloc (26) comprend une ou plusieurs transactions (25, 27),
- ajouter une signature cryptographique (30) à l'aide d'une clé privée (28) du premier nœud (10) au bloc (26), créant ainsi un bloc signé (34), dans lequel la signature cryptographique (30) comprend une valeur de hachage des informations contenues dans le bloc (26), dans lequel la valeur de hachage est cryptée avec la clé privée (28) du premier nœud (10),
- transmettre le bloc signé (34) aux autres nœuds (12, 14, 16), dans lequel les autres nœuds (12, 14, 16) sont configurés pour vérifier la signature cryptographique (30) du bloc signé (34) à l'aide d'une clé publique (32) du premier nœud (10), dans lequel les autres nœuds (12, 14, 16) vérifient auprès de l'entité de confiance (20) si la clé publique (32) du premier nœud (10) est valide, dans lequel l'entité de confiance (20) est un nœud de la chaîne de blocs, dans lequel si la clé publique (32) du premier nœud (10) n'est pas valide, les autres nœuds (12, 14, 16) rejettent le bloc (26, 34) généré par le premier nœud (10), dans lequel chaque nœud (10, 12, 14, 16) est un ordinateur distinct doté d'un processeur dédié, de dispositifs de mémoire et/ou de dispositifs d'entrée-sortie pour communiquer avec d'autres nœuds (10, 12, 14, 16), dans lequel une copie complète de l'historique des transactions de la chaîne de blocs est stockée par au moins certains des nœuds (10, 12, 14, 16).
